# EUROPEAN PATENT APPLICATION

(11) **EP 4 060 082 A1**
(43) Date of publication of application: **21.09.2022**
(21) Application number: 21020148.9
(22) Date of filing: 15.03.2021
(51) Int. Cl.: C25B 1/04, B01D 53/22, C25B 15/08

(54) **PROCESS AND PLANT FOR PROVIDING A PRODUCT GAS MIXTURE FROM A STARTING GAS MIXTURE**

(71) Applicant: Linde GmbH, 82049 Pullach (DE)
(72) Inventor: Bauer, Martin, 80804 München (DE); Johannink, Matthias, 50679 Köln (DE)
(74) Representative: Lu, Jing

(57) **Abstract**

The invention provides a process (200) for providing a product gas mixture (B) from a starting gas mixture (A) containing carbon dioxide and at least one hydrocarbon, wherein a first feed mixture (C) is formed using at least a part of the starting gas mixture (A), wherein the first feed mixture (C) being subjected to at least one membrane separation step (13) to produce a first fraction (D) depleted in carbon dioxide and enriched in the at least one hydrocarbon and a second fraction (E) enriched in carbon dioxide and depleted in the at least one hydrocarbon, and wherein a second feed mixture (F) formed using at least a part of the second fraction (E) is combusted to produce electric energy (G) and waste heat (H). Water (N) is subjected to a conditioning step (30) and thereafter to an electrolysis step (40) to generate hydrogen, and at least a part (Q) of the electric energy (G) is used in the electrolysis step (40). A corresponding plant is also part of the present invention.

## Description

The invention relates to a process for providing a product gas mixture from a starting gas mixture containing carbon dioxide and at least one hydrocarbon, and to a corresponding plant according to the preambles of the independent claims.

### Background of the invention

Before natural gas can be transported by pipeline, it has to go through a complex purification process. As a natural product, natural gas does not just contain the main component methane. It also comprises unwanted components such as water, hydrogen sulphide, carbon dioxide, nitrogen and heavy hydrocarbons. These impurities must first be removed in natural gas processing plants to meet typical specifications for the injection into gas pipelines and/or further processing steps. For example, before natural gas can be injected into a pipeline, the carbon dioxide share has typically to be brought down to a value between two and three percent.

The carbon dioxide content of natural gas varies from one reserve to another. In order to meet the growing demand for natural gas, and as many of the reserves of natural gas with a low carbon dioxide content have now been depleted, increasingly also natural gas from reserves with a high carbon dioxide content of up to 50 or 70 percent is utilized. Therefore, there is a growing demand for advantageous processes for removing carbon dioxide from natural gas. This invention relates to such processes.

While the present invention is hereinafter described with a focus on natural gas, it is likewise usable with other gas mixtures containing at least one hydrocarbon, including particularly at least one of methane, ethane, propane and butane, and carbon dioxide as further specified below, such a gas mixture being referred to as a "starting gas mixture" hereinafter. The gas mixture provided according to the present invention is referred to as a "product gas mixture". The starting gas mixture and the product gas mixture, as understood herein, particularly differ in their carbon dioxide content which is substantially lower, or essentially not present, in the product gas mixture.

Water and and heavy hydrocarbons are typically removed from natural gas using thermal and adsorptive processes.

Until now, chemical absorption processes are most common to separate carbon dioxide from natural gas mixtures during natural gas processing. Referred to as gas scrubbing, these processes are well established and well researched. However, scrubbing also has a number of drawbacks. Chemical scrubbing has a comparatively high energy demand. If the content of carbon dioxide rises, so too does the amount of energy required. Furthermore, there are environmental concerns with the chemicals used in chemical scrubbing.

Membrane processes, which were proposed as an alternative to scrubbing, are based on a completely different separation principle and therefore offer major benefits over the conventional approach: The unwanted carbon dioxide is removed via a purely physical process, i.e. permeation, where, in principle, the membrane works like a semipermeable barrier layer. The present invention relates to membrane processes.

With scrubbing processes, a comparatively "sharp" separation of carbon dioxide and hydrocarbons is possible. This means that carbon dioxide can be separated from the natural gas with almost no hydrocarbon loss to the off gas. However, as the solvent must be regenerated which requires energy, as mentioned, a portion of the natural gas treated is lost as fuel gas for providing this energy.

Membrane processes, on the other hand, do not necessarily require external energy for the separation (depending on the membrane setup), but do not allow for a correspondingly sharp separation due to intrinsic properties of the membrane used. This means that the off gas rich in carbon dioxide always contains a certain amount of hydrocarbons. In some cases, this gas can be used as fuel gas for other processes, but in many cases it is simply burnt or vented, which means a loss of valuable product and an increased emission of greenhouse gases.

As to further details of membrane processes, reference is made to expert literature such as A. Tabe-Mohammadi (1999) A Review of the Applications of Membrane Separation Technology in Natural Gas Treatment, Separation Science and Technology, 34:10, 2095-2111, DOI: 10.1081/SS-100100758. All suitable membranes and membrane arrangements can be used in the context of the present invention which is not limited by the specific design of the membrane process. A "membrane separation step" as understood herein may also contain several membrane units and corresponding apparatus, as well as bypasses, recycle lines, etc.

The present invention has the object of overcoming at least some of the disadvantages of membrane processes for the treatment of natural gas and other gas mixtures of comparable composition.

### Disclosure of the invention

Against this background, the present invention proposes a process for providing a product gas mixture from a starting gas mixture containing carbon dioxide and at least one hydrocarbon and to a corresponding plant comprising the features of the independent claims. Advantageous embodiments of the present invention are the subject of the dependent claims and of the description that follows.

By using a thermal engine, particularly a gas engine, for combusting an off gas rich in carbon dioxide provided by a membrane separation step used in the context of a membrane-based carbon dioxide removal in a processing plant for treating natural gas or a similar gas mixture, the hydrocarbons still contained in the off gas can be used to generate electrical energy. Thus, hydrocarbon emissions can be eliminated. Such a step is proposed according to the present invention.

The electrical energy can be utilized for supply of electrical power to the gas processing plant and/or can be fed into the power grid, thereby improving the overall plant economics. Thermal energy generated in the thermal engine can furthermore also be utilized in gas processing plants, e.g. in a process gas heater upstream of a membrane stage where heating is required to prevent condensation or simply for process optimization means. For example, higher process gas temperatures increase the membrane's permeability which reduces the membrane area (number of membrane cartridges) that is necessary to meet the specified carbon dioxide content in the product gas mixture.This is also proposed according to the present invention.

In case the content of carbon dioxide of the off gas rich in carbon dioxide from the membrane separation step is too high and prevents its direct utilization in a gas engine, preferably a bypass from the feed or retentate (product) side of the membrane unit to the permeate (offgas) side is provided to meet the gas requirements of the thermal engine. This is proposed in an advantageous embodiment of the invention.

According to the present invention, which is particularly advantageous if no feed-in point to a power grid is available, the electrical energy formed as explained is applied for the electrolysis of water. Thus, hydrogen can be generated as a valuable by-product which can either be mixed to the treated natural gas (product gas mixture) and supplied to a pipeline or be used for other purposes.

Water is contained in natural gas and has to be separated therefrom prior to pipeline injection or downstream low-temperature processes. In principle, three sources of water could generally be used according to the invention in order to minimize the need for external water supply: 1) Liquid water from phase separation, 2) Water from a dehydration unit, and 3) Water separated from the thermal engine's off gas For the conditioning of water (e.g. degasification, vaporization), heat and power generated from the thermal engine can be utilized.

Water electrolysis is preferably operated, in the context of the present invention, at a high pressure of particularly 20 to 80 bar to omit the need for an additional hydrogen compression. The hydrogen generated by such a system can then be mixed with the product gas mixture (or be used for other purposes) and be injected into a pipeline. At downstream locations, the hydrogen can easily be separated from the pipeline gas, e.g. by a membrane unit. However, the present invention is not limited to be used in connection with pressurized water electrolysis and can in other cases be used in connection with a pressurizing step for the hydrogen.

Applying the present invention, hydrocarbon (mainly methane) emissions resulting from a membrane-based process for the removal of carbon dioxide from natural gas are eliminated. Valuable hydrocarbons in the off gas rich in carbon dioxide of such a process are no longer vented or flared by converting these hydrocarbons into electrical energy that can be utilized to meet the plant's energy demand or be fed into the power grid. In case no feed-in point to a power grid is available, the electrical energy being applied for the electrolysis of water is particularly advantageous. Thus, hydrogen can be generated as a valuable by-product which can either be mixed to the treated natural gas (product gas mixture) and be supplied to a pipeline or be used for other purposes. In both cases, the energy that is contained in the off gas in the form of hydrocarbons, can be utilized. This is achieved in one or more of the following forms:
- Onsite power and heat supply (reduced cost)
- Power to grid (additional value generation)
- Hydrogen as additional fuel in product gas mixture (additional value)
- High-purity hydrogen on-site or downstream (additional value)

In doing so, membrane-based carbon dioxide removal is significantly improved in both economic and ecological terms by gaining additional value out of the feed gas and eliminating the emission of methane which has more than 20 times higher global warming potential than carbon dioxide, respectively.

In more general terms, and to summarize the above, the present invention provides a process for providing a product gas mixture from a starting gas mixture containing carbon dioxide and at least one hydrocarbon, wherein a first feed mixture is formed using at least a part of the starting gas mixture, wherein the first feed mixture is subjected to at least one membrane separation step to produce a first fraction depleted in carbon dioxide and enriched in the at least one hydrocarbon and a second fraction enriched in carbon dioxide and depleted in the at least one hydrocarbon, and wherein a second feed mixture formed using at least a part of the second fraction is combusted to produce electric energy and waste heat.

According to the present invention, water is subjected to a conditioning step and thereafter is subjected to an electrolysis step to generate hydrogen, wherein at least a part of the electric energy is used in the electrolysis step. As to the specific advantages of the present invention, particularly of using electric energy generated as mentioned, reference is made to the explanations already given above.

In a particularly preferred embodiment, the waste heat may be partly or completely be utilized in forming the feed mixture, or parts of the waste heat may be utilized in forming the feed mixture on the one hand and in the water conditioning step on the other hand, if water conditioning requires heat. According to an embodiment of the invention, only a part of the electric energy is used in the electrolysis step while a further part is used in forming the feed mixture.

Advantageously, at least a part of the hydrogen is optionally compressed (if the electrolysis is not yet performed at a sufficient pressure) and thereafter combined with at least a part of the first fraction to form the product gas mixture. This may later easily be separated by known separation processes or used in combined form, e.g. for combustion purposes, as mentioned.

According to an alternative embodiment of the present invention, advantageously at least a part of the hydrogen is optionally compressed (if necessary) and thereafter combined with at least a part of the starting gas mixture to form the first feed mixture.

In the latter case, particularly a glassy polymeric membrane having a higher permeability for hydrogen than carbon dioxide and the at least one hydrocarbon is used in the at least one membrane separation step. With glassy polymeric membranes having a higher permeability for hydrogen than carbon dioxide and hydrocarbons, hydrogen will permeate faster than carbon dioxide thus reducing the carbon dioxide concentration as well as its partial pressure on the membrane's permeate side. This results in an increased driving force for the separation of carbon dioxide which reduces the membrane area (number of membrane cartridges) that is necessary to meet the specified carbon dioxide content in the product gas mixture.

As frequently mentioned before, natural gas or a gas mixture formed therefrom, i.e. from natural gas, may be used as the starting gas mixture. However, as mentioned before, the present invention may also be used in connection with gas mixtures such as biogas or landfill gas.

The starting gas mixture is particularly subjected to a gas treatment sequence as commonly known and e.g. including a phase separation and a dehydration and a gas mixture formed in the gas treatment sequence from the starting gas mixture is at least in part used to form the first feed mixture.

In the process according to an embodiment of the present invention, as mentioned, a part of the electric energy can be used in forming the feed mixture, i.e. in the gas treatment sequence, wherein "used in" shall include all uses including, but not limited to, operating measuring and/or control equipment and/or operating compressors and pumps. However, in all cases it may be advantageous to feed any surplus electricity to a grid, if present on site. Furthermore, as mentioned, in an embodiment a part of the waste heat may be used in providing the feed mixture, i.e. in the gas treatment sequence, and/or at least a part of the water may be recovered from the gas treatment sequence and/or from offgas produced when combusting the second feed mixture.

In a process according to the present invention, a content in the at least one hydrocarbon in the second feed mixture may particularly be adjusted by bypassing a part of the starting gas mixture or a gas mixture formed therefrom around the at least one membrane separation step. Reference is made to the explanations above.

The starting gas mixture may generally comprise 2 to 45 mol-% of carbon dioxide and up to 98 mol-% of the at least one hydrocarbon, the first fraction may generally comprise 2 to 20 mol-% of carbon dioxide, and the second fraction may comprise 5 to 60 mol-% of carbon dioxide and 40 to 95 mol-% of the at least one hydrocarbon. The contents mainly depend on the source, e.g. whether a methane-rich or rather "wet" natural gas is used.

A plant for providing a product gas mixture from a starting gas mixture containing carbon dioxide and at least one hydrocarbon is also part of the present invention, wherein the plant comprises means adapted to form a first feed mixture using at least a part of the starting gas mixture, wherein the plant comprises means adapted to subject the first feed mixture subjected to at least one membrane separation step to produce a first fraction depleted in carbon dioxide and enriched in the at least one hydrocarbon and a second fraction enriched in carbon dioxide and depleted in the at least one hydrocarbon, and wherein the plant comprises means adapted to form a second feed mixture using at least a part of the second fraction and to combust the second feed mixture to produce electric energy and waste heat.

According to the invention, the plant comprises means adapted to subject water to a conditioning step and thereafter to an electrolysis step to generate hydrogen, and the plant comprises means adapted to use at least a part of the electric energy in the electrolysis step.

As to further features and specific advantages of the plant according to the present invention, reference is made to the explanations of the inventive method and its embodiments above. This also applies to a plant according to a particularly preferred embodiment of the present invention which comprises means adapted to perform a corresponding method.

The present invention is further described with reference to the appended drawings illustrating embodiments of the present invention vis-à-vis non-inventive embodiments.

### Short description of the Figures

Figure 1 illustrates a process for producing a product gas mixture from a starting gas mixture not forming part of the present invention.
Figure 2 illustrates a process for producing a product gas mixture from a starting gas mixture according to an embodiment of the present invention.

In the Figures, elements of identical or comparable construction and/or function are indicated with identical reference numerals and are not repeatedly explained for reasons of conciseness. Explanations relating to methods and steps thereof shall equally apply to apparatus adapted to carry out such method.

### Embodiments of the invention

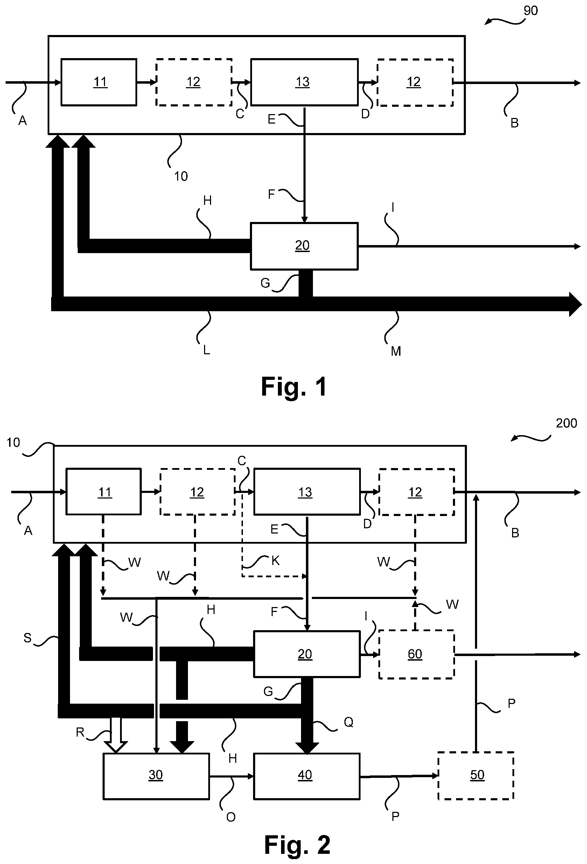

Figure 1 illustrates a process generally indicated 90 for producing a product gas mixture B not forming part of the present invention.

In the process 90, natural gas, e.g. crude well gas, is subjected as a starting gas mixture A to a gas treatment sequence 10, forming the product gas mixture B. The gas treatment sequence 10 may include steps commonly known for processing natural gas, such as, but not limited to, a phase separation 11 to deplete the starting gas mixture A from water and/or heavy hydrocarbons, and a dehydration 12. The dehydration 12 may, as illustrated, be performed upstream or downstream of a membrane separation step 13. To the membrane separation step 13, a first feed mixture C is subjected. Depending on the specific configuration of the separation sequence 10, the first feed mixture C comprises at least a part of the starting gas mixture A.

The membrane separation step 13 is performed to form a first fraction D enriched in at least one hydrocarbon contained in the first feed mixture C and depleted, and optionally essentially free from, carbon dioxide, and to also form a second fraction E depleted in the at least one hydrocarbon and enriched in carbon dioxide. At least a part of the first fraction D is used in forming the product gas mixture B.

Due to the reasons explained above, the second fraction E still contains substantial amounts of the at least one hydrocarbon previously contained in the first feed mixture C. Therefore, a second feed mixture F comprising at least a part of the second fraction E is combusted in an arrangement 20 comprising a thermal engine and a generator, forming electric energy G and waste heat H. Offgas I may be, after optional treatment, be vented to the atmosphere. In case a content in the at least one hydrocarbon is not sufficient for combustion, a part of the starting gas mixture A partially treated in the gas treatment sequence 10 and not explicitly shown in Figure 1 may be bypassed to the second feed mixture F.

The electric energy G may be, in parts L and M, used in the gas treatment sequence 10 and provided to a grid or used in other consumers, while the waste heat H is preferably completely used in the gas treatment sequence 10.

Figure 2 illustrates a process 200 for producing a product gas mixture B according to an embodiment of the present invention. In the process 200, as before, natural gas, e.g. crude well gas, is subjected to a gas treatment sequence 10 as a starting gas mixture A, forming the product gas mixture B. As before, the gas treatment sequence 10 may include steps known for processing natural gas, such as, but not limited to, a phase separation 11 and a dehydration 12. Water which may optionally separated in one or more of these steps is indicated with W. A bypass of a part of the starting gas mixture A partially treated, or the first feed mixture C, to the second feed mixture F is explicitly shown in Figure 2 and indicated with K.

Additionally to the steps already described in connection with Figure 1 above, a water separation 60 from the offgas I is additionally illustrated, providing a further water stream W. The process 200 further comprises a water conditioning step 30 and a water electrolysis step 40. The water W, and optionally further water, is conditioned in the water conditioning step 30, including, e.g. heating, desalting, purification, etc., and conditioned water O is electrolyzed in the electrolysis step 40 to form hydrogen P. The hydrogen P is optionally subjected to a hydrogen compression step 50 and thereafter used in providing the product gas mixture B, together with the first fraction D from the membrane separation step 13.

As shown, the water electrolysis step 40 is performed using a part Q of the electric energy G and further parts R, S of the electric energy G are used in the water conditioning step 30 and in the gas treatment sequence 10, such as optionally are corresponding parts of the waste heat H not specifically labelled.

In an embodiment not explicitly illustrated, hydrogen P can, downstream of the compression step 50, also be recycled and combined with the starting gas mixture, upstream of the separation sequence 10 or at an intermediate position. As mentioned, recycling hydrogen to a position upstream of the membrane separation step 13 is of particular advantage in relation with glassy polymeric membranes having a higher permeability for hydrogen than carbon dioxide and hydrocarbons. In corresponding arrangements, hydrogen will permeate faster than carbon dioxide thus reducing the carbon dioxide concentration as well as its partial pressure on the membrane's permeate side. This results in an increased driving force for the separation of carbon dioxide which reduces the membrane area (number of membrane cartridges) that is necessary to meet the specified carbon dioxide content in the product gas mixture B.

## Claims

1. A process (200) for providing a product gas mixture (B) from a starting gas mixture (A) containing carbon dioxide and at least one hydrocarbon, wherein a first feed mixture (C) is formed using at least a part of the starting gas mixture (A), wherein the first feed mixture (C) being subjected to at least one membrane separation step (13) to produce a first fraction (D) depleted in carbon dioxide and enriched in the at least one hydrocarbon and a second fraction (E) enriched in carbon dioxide and depleted in the at least one hydrocarbon, and wherein a second feed mixture (F) formed using at least a part of the second fraction (E) is combusted to produce electric energy (G) and waste heat (H), **characterized in that** water (N) is subjected to a conditioning step (30) and thereafter to an electrolysis step (40) to generate hydrogen, and **in that** at least a part (Q) of the electric energy (G) is used in the the electrolysis step (40).

2. The process (200) according to claim 1, wherein the waste heat is partly or completely utilized in forming the feed mixture, or wherein parts of the waste heat are utilized in forming the feed mixture and in the water conditioning step.

3. The process (200) according to claim 1 or according to claim 2, wherein a part of the electric energy is used in the electrolysis step (40) while a further part is used in forming the feed mixture.

4. The process (200) according to any of the preceding claims, wherein at least a part of the hydrogen (P) is optionally compressed and thereafter combined with at least a part of the first fraction (D) to form the product gas mixture (B).

5. The process (200) according to any one of the preceding claims, wherein a glassy polymeric membrane having a higher permeability for hydrogen than carbon dioxide and the at least one hydrocarbon is used in the at least one membrane separation step (13).

6. The process (200) according to any of the preceding claims, wherein natural gas or a gas mixture formed therefrom is used as the starting gas mixture (A).

7. The process (200) according to any of the preceding claims, wherein the starting gas mixture (A) is subjected to a gas treatment sequence (10) including a phase separation (11) and a dehydration (12) and wherein a gas mixture formed in the gas treatment sequence (10) from the starting gas mixture (A) is at least in part used to form the first feed mixture (C).

8. The process (200) according to claim 7, wherein a part (R) of electric energy (G) and/or wherein at least a part of the waste heat (H) are used in the gas treatment sequence (10).

9. The process (200) according to claim 7 or 8, wherein at least a part of the water (N) is recovered from the gas treatment sequence (10) and/or from Offgas produced when combusting the second feed mixture (F).

10. The process (200) according to any of the preceding claims, wherein a content in the at least one hydrocarbon in the second feed mixture (F) is adjusted by bypassing a part of the starting gas mixture (A) or a gas mixture formed therefrom around the at least one membrane separation step (13).

11. The process (200) according to any of the preceding claims, wherein the starting gas mixture (A) comprises 2 to 45 mol-% of carbon dioxide and up to 98 mol-% of the at least one hydrocarbon, wherein the first fraction (D) comprises 2 to 20 mol-% of carbon dioxide, and wherein the second fraction (E) comprises 5 to 60 mol-% of carbon dioxide and 40 to 95 mol-% of the at least one hydrocarbon.

12. A plant for providing a product gas mixture (B) from a starting gas mixture (A) containing carbon dioxide and at least one hydrocarbon, wherein the plant comprises means adapted to form a first feed mixture (C) using at least a part of the starting gas mixture (A), wherein the plant comprises means adapted to subject the first feed mixture (C) subjected to at least one membrane separation step (13) to produce a first fraction (D) depleted in carbon dioxide and enriched in the at least one hydrocarbon and a second fraction (E) enriched in carbon dioxide and depleted in the at least one hydrocarbon, and wherein the plant comprises means adapted to form a second feed mixture (F) using at least a part of the second fraction (E) and to combust the second feed mixture (F) to produce electric energy (G) and waste heat (H), **characterized in that** the plant comprises means specifically adapted to subject water (N) to a conditioning step (30) and thereafter to an electrolysis step (40) to generate hydrogen, and **in that** the plant comprises means adapted to use at least a part (Q) of the electric energy (G) in the electrolysis step (40).

13. The plant according to claim 12, comprising means adapted to perform a method as claimed in any of claims 1 to 11.
